## Europäisches Patentamt
## European Patent Office
## Office européen des brevets

(11) Publication number: **0 147 561**
**A2**

# EUROPEAN PATENT APPLICATION

(21) Application number: **84112820.0**

(22) Date of filing: **24.10.84**

(51) Int. Cl.⁴: **G 01 T 1/20**
**G 01 T 1/202**

(30) Priority: 09.11.83 US 549865
08.10.84 DE 3436851

(43) Date of publication of application:
**10.07.85 Bulletin 85/28**

(84) Designated Contracting States:
**DE FR GB NL**

(71) Applicant: **Siemens Aktiengesellschaft**
**Berlin und München Wittelsbacherplatz 2**
**D-8000 München 2(DE)**

(72) Inventor: **Persyk, Dennis E.**
**28385 West Arch Drive**
**Barrington Illinois 60010(US)**

(72) Inventor: **Stoub, Everett W.**
**719 West Terrace**
**Villa Park Illinois 60181(US)**

(72) Inventor: **Schubert, Wolfgang, Dr.**
**Fontanestrasse 3**
**D-8520 Erlangen(DE)**

(54) **Scintillation crystal for a radiation detector and method for producing the same.**

(57) A scintillation crystal and a method for producing same are provided for a radiation detector. According to a first embodiment the crystal comprises a first layer (22; 22') of a crystal material having relatively poor mechanical properties and a high energy resolution, and a second layer (24; 24') of a crystal material having relatively good mechanical and optical properties. Both layers are arranged on top of each other. Preferably a third layer (26) is provided, and the first layer (22. 22') is arranged in sandwich form between the second and third layer. In a second embodiment, a scintillation layer (22) is evaporated on an elastic intermediate layer (18; 29b) which is provided on a substrate (18; 29b). In a third embodiment, a substrate (29c) having an uneven or grooved surface (60) is provided, and a scintillation layer (22c) is evaporated on said surface (60). In a fourth embodiment, a freely supported scintillation layer (22d) is applied. This layer (22d) is sandwiched between two protective layers (24, 26) one of which is coupled to a glass plate (18) via an elastic light coupling medium (27).

FIG 1

/

## BACKGROUND OF THE INVENTION

### 1. Field of the Invention

This invention relates to a scintillation crystal for a radiation
detector and to a method for producing the same. A special radiation
detector in which use may be made of a scintillation crystal
according to the invention is a scintillation gamma camera of
the Anger-type.

### 2. Description of Prior Art

The basic principle of a scintillation gamma camera of the Anger-
type making use of a thallium-activated sodium iodide (NaI[Tl])
scintillation crystal is described in U.S. Patent 3,011,057
(Anger). NaI[Tl] has a relatively high energy resolution. However,
its mechanical properties are relatively poor. Due to this it
happens very often that the scintillation crystal breaks.

U.S. Patent 3,693,018 (Spicer) illustrates an x-ray image
intensifier tube having the photo-cathode formed directly on the
pick-up screen. The x-ray sensitive phosphor of the pick-up screen
is selected from the class consisting of alkali metal halides,
preferably from CsI, NaI and KI. The photo-cathode is preferably
selected from the class of $Cs_3Sb$, $K_3Sb$ and $Rb_3Sb$. This enhances
the quantum efficiency of the photo-cathode, thereby improving
the sensitivity of the intensifier tube.

U.S. Patent 3,980,888 (Gudden et al.) describes a self-supporting
lumminescent screen. A carrier consisting of aluminum carries
a layer of activated cesium iodide (CsI[Na]) which is deposited
on the carrier by evaporation.

VPA-83 P 7442 E

**0147561**

## SUMMARY OF THE INVENTION

1. Objects

It is an object of this invention to provide a scintillation crystal for a radiation detector, in particular for a scintillation gamma camera, which has a relatively high energy resolution as well as relatively good mechanical properties, particularly in terms of mechanical strength.

It is another object of this invention to provide a method for producing such a scintillation crystal.

It is still another object of this invention to provide a method for producing a scintillation crystal which can be worked on under normal room conditions.

2. Summary

According to this invention a scintillation crystal is provided for a radiation detector which comprises

a) a first layer of a crystal material having relatively poor mechanical properties, however having a high energy resolution; and

b) a second layer of a crystal material yielding relatively good mechanical and optical properties;

wherein said layers are arranged on top of each other.

According to this invention there is also provided a method for producing a scintillation crystal which method comprises the steps of

a) placing a substrate having a surface in an evaporation container;

b) placing a certain amount of a first crystal material yielding relatively good mechanical and optical properties in the evaporation container;

c) evaporating the first crystal material such that it deposits upon the surface of the substrate, thereby forming a second crystal layer;

d) placing a certain amount of a second crystal material having relatively poor mechanical properties, however having a high energy resolution in the evaporation container; and

e) evaporating the second crystal material such that it deposits as a first crystal layer upon the second crystal layer.

Another kind of bonding may also be utilized for attaching the first and second layers to each other.

In a preferred embodiment of the invention, the scintillation crystal also comprises a third layer of a crystal material yielding relatively good mechanical and optical properties, wherein the first layer is arranged in sandwich form between the second and third layer.

The scintillation crystal sandwich can be removed from the substrate if desired and bonded to another substrate which is part of a radiation detector (e.g. glass disc). However, when use is made of a substrate which is directly intended to become part of a radiation detector (e.g. glass disc), the crystal sandwich must not necessarily be removed.  Both this substrate and the crystal sandwich can be placed in the radiation detector.

Another preferred embodiment of the invention further comprises the step of annealing the scintillation crystal sandwich to improve its optical and scintillation properties.

According to this invention, the first crystal layer which has excellent scintillation properties is protected by means of the second (and preferably third) layer which has good mechanical properties against shearing and thus breaking.  Also according to this invention, a first crystal layer having excellent scintillation properties and being normally very hygroscopic is passivated by a second (and third) crystal layer being not so hygroscopic, so that when the finished sandwich is removed from an evaporator chamber, the sandwich may be worked on in a low humidity atmosphere, i.e. under normal room conditions.

The foregoing and other objects, features and advantages of the invention will be apparent from the following more particular description of preferred embodiments of the invention, as illustrated in the accompanying drawings.

VPA 83 P 7442·E

0147561

## BRIEF DESCRIPTION OF THE DRAWINGS

In the drawings:

Fig. 1 is a diagrammatic side elevation and sectional view of a scintillation gamma camera head utilizing the invention according to a first embodiment of the invention,

Fig. 2 is a sectional view of a portion of a gamma camera head according to a second embodiment of the invention;

Fig. 3 is a diagrammatic side elevation and sectional view of an evaporator chamber for producing a scintillation crystal according to the invention;

Fig. 4 is a sectional view of a gamma camera head utilizing a second embodiment of the invention;

Fig. 5 illustrates a modification of the embodiment according to Fig. 4;

Fig. 6 is a sectional view of a gamma camera head incorporating a third embodiment of the invention; and

Fig. 7 is a sectional view of a gamma camera head employing a fourth embodiment of the invention.

VPA·83 P 7442 E
0147561

## DETAILED DESCRIPTION OF THE PREFERRED EMBODIMENTS

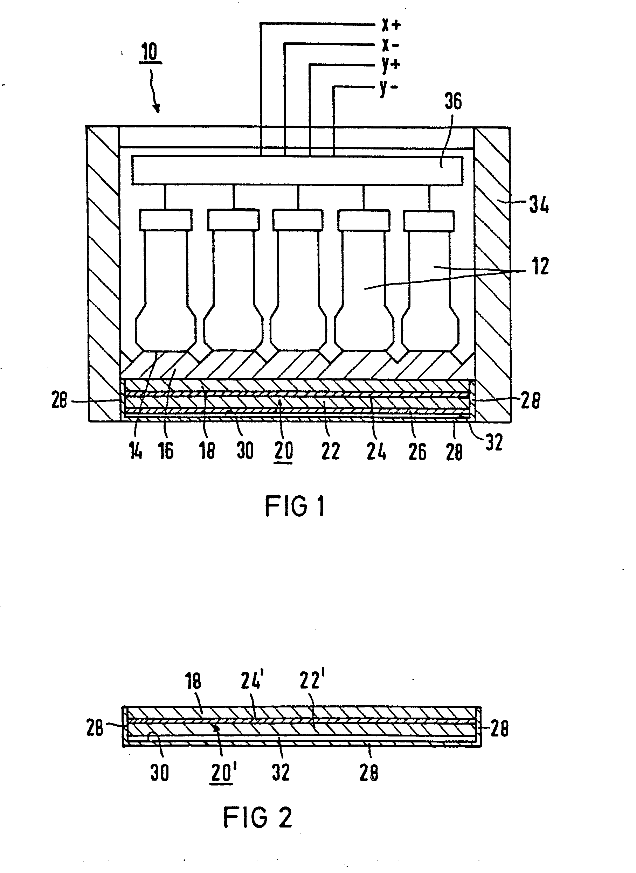

The scintillation gamma camera head 10 illustrated in Fig. 1 is
of the Anger-type. It comprises a certain number n (for example
n = 19) of photomultiplier tubes 12 which are arranged in a
hexagonal array on circular pads 14 of a light conductor 16
(e.g. of Plexiglass). In front of the light conductor 16 there
is arranged a glass cover disc 18 (e.g. 1/2 inch thick Pyrex
glass with a diameter up to 18 inches or more), which is followed
by a scintillation crystal 20.

The scintillation crystal 20 according to a first embodiment of
the invention comprises a first layer 22 of a crystal material
having relatively poor mechanical properties and having a high
energy resolution, such as, for example, thallium-activated
sodium iodide (NaI[Tl]).  It further comprises a second layer 24
and a third layer 26 of crystal materials having relatively good
mechanical and optical properties.  In particular, the second
and third layers 24, 26 are made of a crystal material selected
from the group consisting of cesium iodide (CsI), sodium-activated
cesium iodide (CsI[Na]) and thallium-activated cesium iodide
(CsI[Tl]).  The first layer 22, the second layer 24 and the third
layer 26 are arranged in sandwich form, whereby the layers 24, 26
enclose the first layer 22, thus forming the sintillation crystal
20. The complete sandwiched scintillation crystal 20 is covered
with an aluminum cover 28 having an inner surface covered with a
reflecting layer 30 made of, for instance, magnesium oxide (MgO).
There is also a thin air gap 32 between the third layer 26 of the
sandwich crystal 20 and the aluminum cover 28. The housing of
the scintillation gamma camera head is denoted by 34.

The incidence of a gamma particle on the material of the first
layer 22 of the scintillation crystal 20 produces visible photons
which move via the light conductor 16 to the inputs of the photomultiplier tubes 12. As a result, an electronic calculation net-

VPA ·83 P 7442 C
0147561

work 36 supplies loction signals or deflection signals X+, X-, Y+, Y- to a cathode ray tube or a digital display device (not shown) in a manner known per se.

Fig. 2 illustrates a second embodiment of the invention. In this embodiment, the scintillation crystal 20' comprises a first layer 22' of a crystal material having again relatively poor mechanical properties and a high energy resolution, e.g. NaI[Tl]. However, instead of two additional layers 24, 26, it comprises merely a second layer 24' of a crystal material having relatively good mechanical and optical properties, e.g. CsI, CsI[Na] or CsI[Tl]. Both layers 22', 24' are arranged in sandwich form, i.e. the second layer 24' is located immediately on top of the first layer 22'. In other words, the layer 22' is backed by the layer 24'.

In both embodiments according to Figs 1 and 2, the thickness of the first layer 22, 22' of the scintillation crystal 20, 20' is in the range of 1/4 inch to about 1 inch, depending on the energy of the gamma rays being detected.

In practice most gamma interactions should take place in the first layer 22, 22' of the scintillation crystal 20, 20'. Due to this, the second layer 24, 24' and the third layer 26, if present should be thin with respect to the thickness of the first layer 22, 22'. Their thicknesses preferably lie in the order of 0.1 mm (0.004 inch) to abaut 1 mm (0.04 inch). This is thin enough so that the second and third layers 24, 24' and 26, respectively, practically do not contribute to the scintillation properties of the sandwich crystal. However, the second and third layers are thick enough to absorb mechanical shears between the glass disc 18 (or if there exist any, also between the aluminum cover 28) and the first layer 22, 22'.

The second and third layers 24, 24' and 26 respectively, additionally very have important advantages. As is well known in the art,

VPA· 83 F 7442 E
·0147561

a crystal material such as NaI[Tl] has excellent scintillation
properties, but is very hygroscopic and requires handling at dew
points of -50°C or less. Special relatively costly procedures and
room conditions have to be provided to produce scintillation
crystals from such a crystal material.

Enclosing a first layer of a crystal material which has excellent
scintillation properties and which is very hygroscopic, namely
NaI[Tl], in a second and a third layer of a crystal material which
is not that extensively hygroscopic, namely a crystal material
selected from the group consisting of e.g. cesium iodide (CsI),
sodium-activated cesium iodide (CsI[Na]) and thallium-activated
cesium iodide (CsI[Tl]), provides an interim kind of "hermetic
seal" to keep moisture away from the first layer 22, 22' beneath.
This allows subsequent canning operation to procede in a normal low
humidity working atmosphere, that is under normal room conditions.
A special glove-box atmosphere of -50°C dew point is not required.

Application of the second crystal layer 24, 24' solves also the
problem of a mismatch of the thermal coefficients of expansion
between the first crystal 22, 22' and the glass disc 18.

A method for producing a crystal sandwich 20 or 20' according to
this invention comprises the following steps:

  1.  a substrate such as the glass disc 18 is arranged in
  a suitable evaporation chamber or container, which container
  is associated with a heater;

  2.  a certain amount of a crystal material selected from the
  group consisting of CsI, CsI[Na] or CsI[Tl] is placed in the
  evaporation container;

  3.  the crystal material is then evaporated by the heater
  such that it is deposited upon one surface of the glass
  disc as the second layer 24 or 24' of the crystal sandwich;

4.  subsequently a certain amount of NaI and TlI crystal
material is placed in the evaporation container;

5.  The NaI and TlI crystal material is then evaporated by
the heater such that it is deposited on the second layer 24
or 24' as the first layer 22 or 22' of the crystal sandwich;

6.  in case of the embodiment according to Fig. 2, the
crystal sandwich 20' is removed after preceding annealing
and sealed with the aluminum cover 28;

7.  in case of the embodiment according to Fig. 1, instead
of step 6, steps 2 and 3 are repeated to form the third
layer 26 which, after a preceding annealing, is sealed with
the aluminum cover 28.

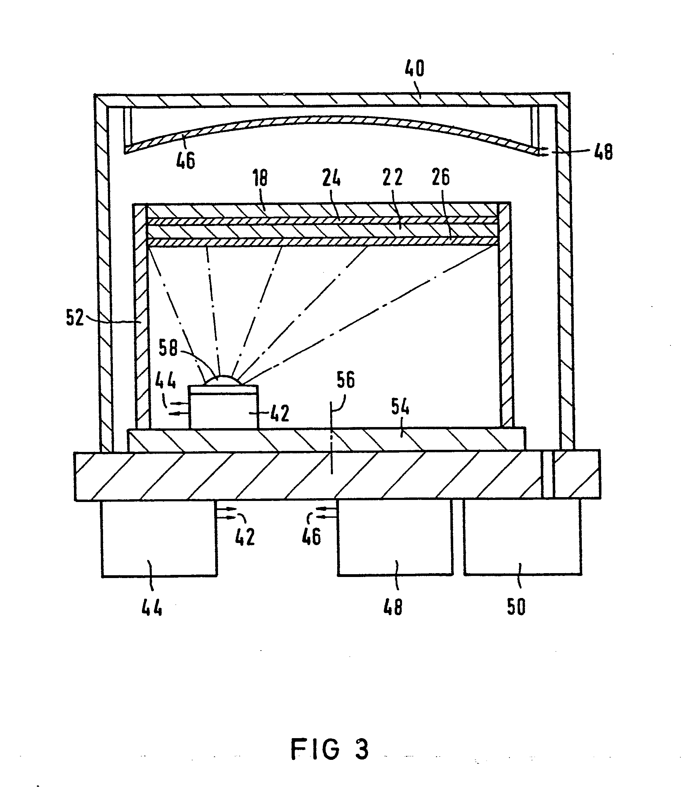

An evaporation chamber or container 40 for evaporation according
to the invention is shown in Fig. 3. The chamber 40 comprises an
evaporator or heater 42 which is supplied with heater current
from a first current source 44. It also comprises a radiant
heater 46 which is supplied by a second current source 48. A
vacuum pump 50 evacuates the chamber 40. The glass disc 18 is
located inside the chamber 40 by means of a support structure
52, 54 which is rotatable about an axis 56. A crystal material
to be evaporated is indicated at 58. By varying the material 58,
various layers such as 24, 22 and 26 can be placed on the glass
disc 18 and subsequently on top of each other.

The technical background of the invention illustrated in Figs. 1 through 3 may be summarized as follows:

It is an object of the manufacturer of a scintillation camera to replace the comparatively expensive and sensitive scintillator single crystal by an evaporated scintillation layer which can be produced at comparatively low cost. Yet, such a replacement is not possible without any additional measures, since a number of physical parameters such as brittleness, different coefficients of expansion, etc. seem to be incompatible with each other. These parameters have to be observed very closely. In addition it must be taken into account that the scintillation layer has to be protected against humidity and mechanical effects such as stress. If possible, the scintillation layer produced by evaporation should be firmly attached to the envelope or housing of the scintillator arrangement already during the layer producing process, due to cost saving reasons.

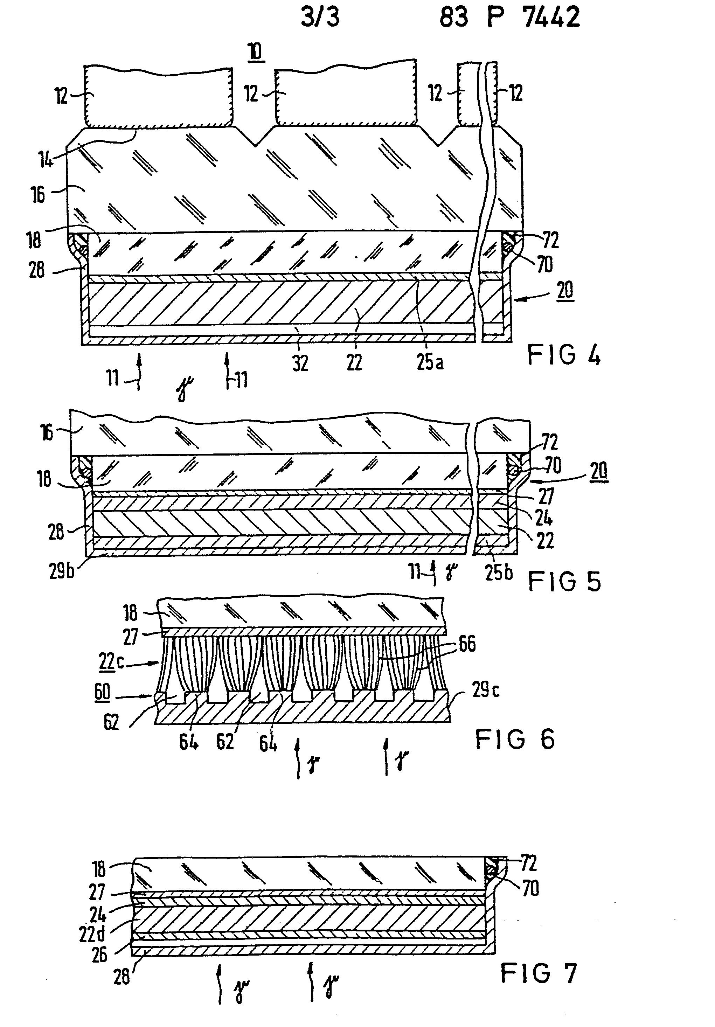

The embodiments illustrated in Figs. 4 through 7 are constructed according to these guidelines. In these embodiments, an evaporated scintillation layer is utilized. The material for the scintillation layer is preferably an alkali metal halide, such as potassium iodide or cesium iodide, which is activated by a scintillating activator. In these embodiments, the different coefficients of expansion of the scintillation layer and the adjoining material, respectively, are taken into account by an elastic intermediate layer, by a certain structure of the surface of the scintillation layer and/or by an elastic light coupling medium. Due to these measures, breaking or cracking of the scintillation layer can be eliminiated to a large extent.

Fig. 4 illustrates a portion of a detector head 10 of a scintillation camera for detection of gamma quanta 11. The detector head 10 encompasses a predetermined number of photomutliplier tubes 12 which in a hexagonal array adjoin the circular elevations or pads 14 of a light pipe 16. The light pipe 16 may consist e.g. of Plexi glass. In front of the light pipe 16 there is arranged a glass plate 18 which preferably is made of Pyrex glass. The glass plate 18 has an even thickness across its longitudinal dimensions of 1.3 cm, for example, and a diameter of 45 cm or more, for example. The glass plate 18 is a component of a scintillation crystal arrangement which is generally refered to as 20.

The scintillation crystal arrangement 20 comprises a scintillation layer 22 which converts the energy of impinging gamma quanta 11 into light. The material of this scintillation layer 22 may have relatively poor mechanical properties; however, it should have a relatively high energy resolution. The layer 22 may preferably be a layer of an alkali halide which is doped with an activator. Preferably, the scintillation layer 22 may contain sodium iodide (NaJ) as a matrix substance which is activated by thallium (Tl). Instead, the matrix layer may consist of cesium iodide (CsJ) to which is added a suitable activator such as sodium or europium.

The different coefficients of thermal expansion of the Pyrex glass plate 18 on the one hand and the scintillation layer 22 comprising sodium iodide or cesium iodide on the other hand do not permit for a direct connection or attachment of these two materials. In order to avoid problems during the production process, an anorganic or organic intermediate layer 25a having elastic properties is provided between the two layers 18 and 22.

The production is performed as follows: the Pyrex glass plate 18 is used as a substrate, and the elastic intermediate layer 25a is deposited onto this glass plate 18 or attached thereto in a suitable manner. The intermediate layer 25a must be colourless and light transparent in this embodiment. It should not fluoresce and should be adapted to the Pyrex glass plate 18 with respect to the index of refraction. Subsequently the NaJ or CsJ scintillation layer 22 doped with an activator is evaporated onto the elastic intermediate layer 25a. In the production of the embodiment according to Fig. 4, the process of building the arrangement 20 is performed from the side where the light will exit later on.

The combination of the layers 18, 25a and 22 is placed in a pot-shaped housing portion 28. This housing portion 28 may preferably be made of aluminum. A space 32 is provided between the end of this combination facing the gamma radiation entrance side on the one hand and the bottom of the housing portion 28 on the other hand. This space 32 may be empty or, preferably, filled with a light reflecting material. The scintillation layer 22 is hermetically sealed in the housing 18, 28. Simultaneously it is protected against humidity. The Pyrex glass plate 18 serves as a lid for the pot-shaped housing portion 28.

In Fig. 5, there is illustrated an embodiment in which the bottom wall 29b of the pot-shaped housing portion 28 is utilized as a substrate. The housing portion 28 may again preferably be made of aluminum. In the production process, an anorganic or organic intermediate layer 25b having elastic properties is attached or bonded to the bottom wall 29b. Subsequently the scintillation layer 22 is evaporated on the intermediate layer 25b. Thus, in the production process of the embodiment according to Fig. 5 the build-up is performed from the gamma radiation entrance side. The elastic intermediate layer 25b again prevents the scintillation layer 22 from detaching from the substrate (bottom wall 29b) and crumbling under thermal stress. In contrast to the elastic intermediate layer 25a shown in Fig. 4, the optical requirements mentioned above are relaxed or eliminated with respect to the elastic intermediate layer 25b. The intermediate layer 25b should be made from a material that hardly absorbs the impinging gamma radiation 11. The intermediate layer 25b again should have an equal thickness. The intermediate layer 25b may be colored by a reflection medium, such as $TiO_2$ or MgO.

In Fig. 5 is illustrated that the scintillation layer 22 proper is attached to the Pyrex glass plate 18 via an intermediate layer 24 and via a thin optical coupling layer 27 of an elastic material. The intermediate layer 24 is provided for protection purposes and may comprise cesium iodide (CsJ). In contrast thereto, the intermediate layer 24 may also be eliminated altogether. The arrangement of the four layers 25b, 22, 24, and 27 is again placed in a pot-formed housing portion 28 made of aluminum. The scintillation crystal arrangement 20 thus formed is attached to the light pipe 16 in accordance with the embodiment of Fig. 4.

In Fig. 6 another possibility for compensation of the coefficients of expansion of a substrate 29c on the one side and an evaporated scintillation layer 22c on the other side is illustrated. Again these coefficients are assumed to be different from each other. In this embodiment an elastic intermediate layer is not required. The substrate 29c again comprises a metal, preferably aluminum. The substrate 29c may again be formed by the bottom wall of the housing portion 28 which houses the scintillation crystal arrangement 20. In this embodiment, a substrate 29c having a structured surface 60 is applied. The term "structured" is intended to mean herein any uneven formation or design of the surface 60. Particularly, the surface 60 may be provided with a plurality of narrow grooves. As illustrated, the surface 60 is provided with a number of parallel grooves 62 which are disposed perpendicularly to additional parallel grooves (not shown). The elevations or crests between the grooves 62 are denoted by reference numeral 64. If a scintillation layer 22c is evaporated on such a structured surface 60, a division of the layer 22c is achieved which takes the form of columns 66. These columns 66 consist of small needle-shaped crystals of the scintillation crystal material. Also in this embodiment, the scintillation layer 22c is coupled to a Pyrex glass plate 18 via an optical coupling layer 27.

In the embodiment according to Fig. 6, any expansion or contraction due to heating or cooling is distributed across a large number of small grooves 62 and elevations 64. Thereby, a generation of large and broad cracks is avoided in the production and in the operation of the scintillation crystal arrangement 20.

In Fig. 7, there is shown another possibility for the compensation of different thermal expansion of a scintillation layer on the one hand and an adjacent layer on the other hand. The basic idea in this embodiment is to use a freely supported scintillation layer 22d. Such a freely supported scintillation layer 22d may be produced according to a method that is described in detail in German patent 22 47 524 (corresponds to U.S. patent 3,980,888). The freely supported layer 22d may comprise, for instance, an activated sodium iodide. Both sides of the layer 22d are covered, e.g. due to evaporation, with a non-activated protective layer 24 and 26, respectively. These protective layers 24, 26 may preferably consist of cesium iodide. The combination of the layers 22d, 24, 26 is coupled to a Pyrex glass plate 18 via a coupling layer 27, e.g. made of silicon rubber. Also in this instance the coupling medium 27 serves two purposes: firstly it provides for an optical coupling, and secondly it provides for a compensation or an equalization of the coefficients of thermal expansion. The combination of the layers 26, 22d, 24, 27 and 18 may again be introduced into a pot-shaped housing portion 28 and attached therein. The attachment may be performed in a manner known per se. For instance, there may be provided a cord or string 70 arranged in a circular fashion around the layer 18. The cord 70 is provided for sealing purposes. It is arranged at the upper rim portion of the housing 28 and attached there by means of an epoxy resin packing 72. The packing 72 provides for a reliable bonding. Also in this embodiment the housing portion 28 is preferably made out of a metal such as aluminum. Similar means 70, 72 for sealing the scintillation crystal arrangement are also shown in Figs. 4 and 5.

VPA 83 P 7442 E
0147561

WHAT IS CLAIMED IS:

1. A scintillatin crystal for a gamma radiation detector, comprising

a) a first layer (22; 22') of a crystal material having relatively poor mechanical properties and having high energy resolution, said first layer (22; 22') emitting light in response to impinging gamma radiation; and

b) a second layer (24; 24') of a crystal material having relatively good mechanical and optical properties;

wherein said second layer (24; 24') is placed on top of said first layer (22; 22') to protect said first layer (22; 22') against breaking and is thin with respect to said first layer (22; 22') and makes a negligible contribution to the scintillation properties of said first layer (22; 22').

2. The scintillation crystal according to claim 1, further comprising a third layer (26) of a crystal material having relatively good mechanical and optical properties, wherein said first layer (22; 22') is arranged in sandwich form between said second and third layer (24, 24'; 26).

3. The scintillation crystal according to claim 1 or 2, wherein said first layer (22; 22') is made of thallium-activated sodium iodide (NaI Tl ).

4. The scintillation crystal according to claim 1, 2 or 3, wherein said second layer (24; 24') is made of a crystal material selected from the group consisting of cesium iodide (CsI), sodium-activated cesium iodide (CsI[Na]) and thallium-activated cesium iodide (CsI[Tl]).

- 17 -

5.    The scintillation crystal according to claim 2, 3 or 4, wherein said third layer (26) is made of a crystal material selected from the group consisting of cesium iodide (CsI), sodium-activated cesium iodide (CsI[Na]) and thallium-activated cesium iodide (CsI[Tl]).

6.    The scintillation crystal according to claim 2, wherein said first layer (22; 22') is made of thallium-activated sodium iodide (NaI[Tl]), and wherein said second and third layers (24; 26; 24') are made of a crystal material selected from the group consisting of cesium iodide (CsI), sodium-activated cesium iodide (CsI[Na]) and thallium-activated cesium iodide (CsI[Tl]).

7.    The scintillation crystal according to claim 1, wherein the frist layer (22; 22') has a thickness in the range of 1/4 inch to 1 inch; and wherein the second layer (24; 24') has a thickness in the range of 0.1mm to 1mm.

8.    The scintillation crystal according to claim 2, wherein the third layer (26) has a thickness in the range of 0.1mm to 1mm.

9.    A method for producing a scintillation crystal, comprising the steps of:

    a)    placing a substrate (18) having a surface in an evaporation container (40);

    b)    placing a certain amount of a first crystal material yielding relatively good mechanical and optical properties in the evaporation container (40);

    c)    evaporating the first crystal material such that it deposits upon the surface of the substrate (18), thereby forming a second crystal layer (24; 24');

d) placing a certain amount of a second crystal material having relatively poor mechanical properties and yielding high energy resolution in the evaporation container (40); and

e) evaporating the second crystal material such that it deposits as a first crystal layer (22; 22') on the second crystal layer (24; 24').

10. The method according to claim 9, further comprising the steps of:

a) placing a certain amount of a third crystal material yielding relatively good mechanical properties in the evaporation container (40); and

b) evaporating the third crystal material such that it deposits on the first crystal layer (22) as a third crystal layer (26).

11. The method according to claim 9 or 10, further comprising the step of sealing the crystal sandwich (20; 20') with a metal cover (28).

12. The method according to claim 9, 10 or 11, wherein said first crystal material is selected from the group consisting of cesium iodide (CsI), sodium-activated cesium iodide (CsI[Na]) and thallium-activated cesium iodide (CsI[Tl]).

13. The method according to claim 9, 10, 11 or 12, wherein said second crystal material is thallium-activated sodium iodide (NaI [Tl]).

14. The method according to any of the claims 10 through 13, wherein said third crystal material is selected from the group consisting of cesium iodide (CsI), sodium-activated cesium iodide (CsI[Na]) and thalliumactivated cesium iodide (CsI[Tl]).

15. The method according to claim 10, wherein said second crystal material is thallium-activated sodium iodide (NaI[Tl]), and wherein said first and third crystal materials are selected from the group consisting of cesium iodide (CsI), sodium-activated cesium iodide (CsI[Na]) and thallium-activated cesium iodide (CsI[Tl]).

16. The method according to claim 15, further comprising the step of sealing the crystal sandwich (20, 20') with an aluminum cover (28).

17. The method according to any of the claims 9 through 16, further comprising the step of annealing the crystal sandwich (20; 20').

18. A radiation detector having a scintillation crystal (20; 20') according to any one of claims 1 through 8.

19. The radiation detector according to claim 18, having a scintillation gamma camera head (10) which comprises said scintillation crystal (20; 20').

20. A scintillation crystal arrangement for a scintillation camera, said arrangement comprising:
a) a substrate (18; 29b);
b) a elastic intermediate layer (25a; 25b) provided on said substrate (18; 29b); and
c) a scintillation layer (22) evaporated on said intermediate layer (18; 29b), said scintillation layer (22) emitting light in response to impinging gamma radiation (11).

21. The arrangement of claim 20, wherein said substrate (18) is a glass plate, and wherein said intermediate layer (25a) is transparent with respect to light and colorless.

22. The arrangement of claim 20, wherein said substrate (29b) is a metal layer, said layer having an equal thickness across its longitudinal dimensions and displaying a comparetively low absorption with respect to gamma radiation (11).

23. The arrangement of claim 22, wherein said substrate (18) comprises a metal layer of aluminum.

24. The arrangement of claim 20, 22 or 23, wherein said intermediate layer (25b) is a light reflecting layer.

25. A scintillation crystal arrangement for a scintillation camera, said arrangement comprising:
a) a substrate (29c) having an uneven surface (60); and
b) a scintillation layer (22c) evaporated on said substrate (29c), said scintillation layer (22c) emitting light in response to impinging gamma radiation (11).

26. The arrangement of any of the claims 20 through 25, comprising a housing (28) for enclosing said scintillation layer (22), wherein said substrate (18; 29b; 29c) is a portion of said housing (28).

27. The arrangement of claim 25 or 26, wherein said surface (60) of said substrate (29c) is provided with a plurality of elevations (64), each of said elevations (64) having evaporated on its surface a column (66) of a scintillation layer material.

28. The arrangement of claim 25, 26 or 27, wherein said substrate (29c) is a metal.

29. The arrangement of claim 28, wherein said substrate (29c) is aluminum.

30. The arrangement of any of the claims 25 through 29, wherein said surface (60) contains a first and second plurality of grooves (62), said first plurality of grooves (62) being arranged perpendicularly to said second plurality of grooves.

31. A scintillation crystal arrangement for a scintillation camera, said arrangement comprising:
a) a freely supported scintillation layer (22d) emitting light in response to impinging gamma radiation (11);
b) two protective layers (24, 26), said scintillation layer (22d) being sandwiched by said protective layers (24, 26); and
c) an elastic light coupling medium (27) for coupling one of said two protective layers (24, 26) to a glass plate (18).

32. The arrangement of claim 31, wherein said light coupling medium (27) is a silicon rubber.

33. The arrangement of claim 31 or 32, wherein said scintillation layer (22d) comprises activated sodium iodide (NaJ), and wherein said protective layers (24, 26) comprise non-activated cesium iodide (CsJ).

34. The arrangement of any of the claims 20 through 33, wherein said scintillation layer (22; 22c; 22d) is contained in a pot-shaped housing (28) made of aluminum, and wherein said housing (28) is covered by a glass plate (28).

FIG 1

FIG 2

0147561

FIG 3

0147561

FIG 4

FIG 5

FIG 6

FIG 7